# EUROPEAN PATENT APPLICATION

(11) **EP 4 779 701 A1**
(43) Date of publication of application: **22.07.2026**
(21) Application number: 26152049.8
(22) Date of filing: 15.01.2026
(51) Int. Cl.: H01M 4/13, H01M 4/1393, H01M 4/38, H01M 4/587, H01M 4/62, H01M 10/0525

(54) **ANODE FOR SECONDARY BATTERY AND LITHIUM SECONDARY BATTERY INCLUDING THE SAME**

(30) Priority: 16.01.2025 KR 20250006919; 09.01.2026 KR 20260004533
(71) Applicant: SK On Co., Ltd., Seoul 03161 (KR); SK Innovation Co., Ltd., Seoul 03188 (KR)
(72) Inventor: YU, Gyeong Hwa, 34124 Daejeon (KR); KANG, Byung Chan, 34124 Daejeon (KR); KIM, Jang Goon, 34124 Daejeon (KR); SONG, Jung Hwan, 34124 Daejeon (KR); LEE, Ho Seung, 34124 Daejeon (KR); YIM, Hyung Joo, 34124 Daejeon (KR); JOE, Yong Nam, 34124 Daejeon (KR); HEO, Kyun, 34124 Daejeon (KR)
(74) Representative: Prüfer & Partner mbB Patentanwälte · Rechtsanwälte

(57) **Abstract**

An anode for a secondary battery includes an anode current collector, and an anode active material layer disposed on a surface of the anode collector and including an alcohol. In a 1H NMR analysis of the anode active material layer, a sum of a peak area of a first peak observed in a range of 4 ppm to 4.5 ppm and a peak area of a second peak observed in a range of 3.5 ppm to 4 ppm is greater than 0, and 0.15 or less. A peak area of a third peak observed in a range of 1.5 ppm to 2 ppm is greater than 0, and 0.15 or less. A peak area of a fourth peak observed in a range of 1 ppm to 1.5 ppm is greater than 0, and 0.8 or less.

## Description

### BACKGROUND

### 1. Field

The present disclosure provides an anode for a secondary battery, a method of manufacturing the same, and a lithium secondary battery including the same.

### 2. Descriptions of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as an electric vehicle, a hybrid vehicle, etc.

Examples of the secondary battery include a lithium secondary battery, a sodium secondary battery, a potassium secondary battery, a nickel-cadmium battery, a nickel-hydrogen battery, etc. The lithium secondary battery among the secondary batteries is being actively developed due to high operational voltage and energy density per unit weight, a high charging rate, a compact dimension, etc.

For example, a lithium secondary battery may include an electrode assembly including a cathode, an anode and a separator, and an electrolyte solution that may impregnate the electrode assembly. The lithium secondary battery may further include, e.g., a pouch-type exterior material that accommodates the electrode assembly and the electrolyte solution.

A lithium secondary battery having a high capacity and an enhanced charge/discharge rate is being developed. Additionally, developments of an anode for implementing a lithium secondary battery with improved high-rate properties and high capacity are needed.

### SUMMARY

According to an aspect of the present disclosure, there is provided an anode for a secondary battery having improved electrochemical properties.

According to an aspect of the present disclosure, there is provided a lithium secondary battery having improved electrochemical properties.

According to embodiments of the present disclosure, an anode for a secondary battery includes an anode current collector, and an anode active material layer disposed on a surface of the anode collector. The anode active material layer includes an alcohol. In a 1H NMR analysis of the anode active material layer using a CDCl₃ solvent and trimethoxybenzene as a reference material under room temperature and atmospheric pressure and setting a reference area by fixing the number of protons of a peak observed in a range of 6 ppm to 6.5 ppm to three, a sum of a peak area of a first peak observed in a range of 4 ppm to 4.5 ppm and a peak area of a second peak observed in a range of 3.5 ppm to 4 ppm is greater than 0, and 0.15 or less. A peak area of a third peak observed in a range of 1.5 ppm to 2 ppm is greater than 0, and 0.15 or less. A peak area of a fourth peak observed in a range of 1 ppm to 1.5 ppm is greater than 0, and 0.8 or less.

In some embodiments, the peak area of the first peak may be in a range from 0.01 to 0.04.

In some embodiments, the peak area of the second peak may be in a range from 0.03 to 0.08.

In some embodiments, the peak area of the third peak may be in a range from 0.05 to 0.13.

In some embodiments, the peak area of the fourth peak may be in a range from 0.3 to 0.6.

In some embodiments, the alcohol may include a monohydric alcohol or a dihydric alcohol.

In some embodiments, the alcohol may include a monohydric alcohol having 3 to 10 carbon atoms or a dihydric alcohol having 3 to 10 carbon atoms.

In some embodiments, a loading amount of the anode active material layer may be in a range from 5 mg/cm² to 30 mg/cm².

In some embodiments, the anode active material layer may include a graphite-based active material and a silicon-based active material.

In some embodiments, a ratio of a content of the graphite-based active material to a content of the silicon-based active material based on a total weight of the anode active material layer may be in a range from 5 to 30.

According to embodiments of the present disclosure, a lithium secondary battery includes the above-described anode for a secondary battery, and a cathode opposing the anode.

An anode for a secondary battery according to embodiments of the present disclosure may have a low surface tension, and curls and/or cracks may be suppressed during a fabrication of the anode. Thus, efficiency and productivity of the anode fabrication may be improved. Additionally, the anode for a secondary battery may have improved capacity and stability.

A lithium secondary battery according to embodiments of the present disclosure may have improved life-span properties.

The anode for a secondary battery and the lithium secondary battery according to the present disclosure may be widely applied in green technology fields such as an electric vehicle, a battery charging station, a solar power generation, a wind power generation, etc., using a battery, etc. The anode for a secondary battery and the lithium secondary battery according to the present disclosure may be used for eco-friendly electric vehicles, hybrid vehicles, or the like, to prevent a climate change by suppressing air pollution and greenhouse gas emissions. etc.

### BRIEF DESCRIPTION OF THE DRAWINGS

FIG. 1 is a schematic plan view illustrating a lithium secondary battery according to an embodiment.
FIG. 2 is a schematic cross-sectional view illustrating a lithium secondary battery according to an embodiment.
FIGS. 3 and 4 are graphs showing internal resistance of batteries according to Reference Example, Examples and Comparative Examples according to the number of cycles.
FIGS. 5 and 6 are graphs showing discharge capacities of batteries of Reference Example, Examples and Comparative Examples according to the number of cycles.

### DETAILED DESCRIPTION OF THE EMBODIMENTS

The present disclosure provides an anode for a secondary battery that provides predetermined 1H NMR measurement properties. Additionally, the present disclosure provides a lithium secondary battery including the anode for a secondary battery.

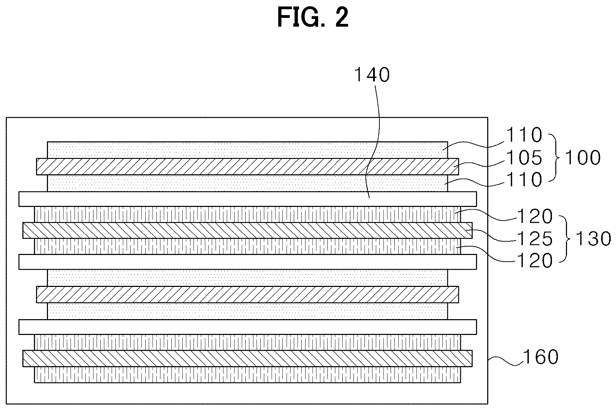

An anode for a secondary battery 130 (hereinafter, that may be abbreviated as an anode) according to the present disclosure includes an anode current collector 125 and an anode active material layer 120 disposed on a surface of the anode current collector. In example embodiments, the anode active material layer 120 may be disposed on one surface or each of both surfaces of the anode current collector 125 (see FIG. 2).

Non-limiting examples of the anode current collector 125 include a copper foil, a nickel foil, a stainless steel foil, a titanium foil, a nickel foam, a copper foam, a polymer substrate coated with a conductive metal, or the like. In a non-limiting example, a thickness of the anode current collector 125 may be, e.g., in a range from 4 µm to 50 µm.

The anode active material layer 120 includes an alcohol. The alcohol has a lower surface tension than that of a solvent of an anode slurry, e.g., and curls and cracks that may occur due to a difference in shrinkage ratios with the anode current collector 125 during a formation of the anode active material layer 120 may be prevented.

In example embodiments, the surface tension of the alcohol may be 50 mN/m or less. Accordingly, the surface tension of the anode surface may be lowered, and cracks and/or curls may be prevented when forming the anode active material layer.

In example embodiments, a boiling point of the alcohol at normal pressure may be 130 °C or higher. Accordingly, the alcohol may be evaporated more slowly than water during the formation process of the anode active material layer 120, and damages due to excessive shrinkage during drying of the anode active material layer 120 may be prevented.

In example embodiments, the alcohol may include a monohydric alcohol or a dihydric alcohol. In some embodiments, the alcohol may include a monohydric alcohol having 3 to 10 carbon atoms, or a dihydric alcohol having 3 to 10 carbon atoms.

For example, the alcohol may include 1-propanol, 2-propanol, 1-butanol, 2-butanol, 1-pentanol, 2-pentanol, 3-pentanol, 1-hexanol, 2-hexanol, 3-hexanol, 1-heptanol, 2-heptanol, 3-heptanol, 4-heptanol, 1-octanol, 2-octanol, 3-octanol, 4-octanol, 1-nonanol, 2-nonanol, 3-nonanol, 4-nonanol, 5-nonanol, 1-decanol, 2-decanol, 3-decanol, 4-decanol, 5-decanol, 1,1-propanediol, 1,2-propanediol, 2,2-propanediol, 1,3-propanediol, 1,1-butanediol, 1,2-butanediol, 1,3-butanediol, 1,4-butanediol, 2,2-butanediol, 2,3-butanediol, 1,1-pentanediol, 1,2-pentanediol, 1,3-pentanediol, 1,4-pentanediol, 1,5-pentanediol, 2,2-pentanediol, 2,3-pentanediol, 2,4-pentanediol, 3,3-pentanediol, 1,1-hexanediol, 1,2-hexanediol, 1,3-hexanediol, 1,4-hexanediol, 1,5-hexanediol, 1,6-hexanediol, 2,2-hexanediol, 2,3-hexanediol, 2,4-hexanediol, 2,5-hexanediol, 3,3-hexanediol, 3,4-hexanediol, 1,1-heptanediol, 1,2-heptanediol, 1,3-heptanediol, 1,4-heptanediol, 1,5-heptanediol, 1,6-heptanediol, 1,7-heptanediol, 2,2-heptanediol, 2,3-heptanediol, 2,4-heptanediol, 2,5-heptanediol, 2,6-heptanediol, 3,3-heptanediol, 3,4-heptanediol, 3,5-heptanediol, 4,4-heptanediol, 1,1-octanediol, 1,2-octanediol, 1,3-octanediol, 1,4-octanediol, 1,5-octanediol, 1,6-octanediol, 1,7-octanediol, 1,8-octanediol, 2,2-octanediol, 2,3-octanediol, 2,4-octanediol, 2,5-octanediol, 2,6-octanediol, 2,7-octanediol, 3,3-octanediol, 3,4-octanediol, 3,5-octanediol, 3,6-octanediol, 4,4-octanediol, 4,5-octanediol, 1,1-nonanediol, 1,2-nonanediol, 1,3-nonanediol, 1,4-nonanediol, 1,5-nonanediol, 1,6-nonanediol, 1,7-nonanediol, 1,8-nonanediol, 1,9-nonanediol, 2,2-nonanediol, 2,3-nonanediol, 2,4-nonanediol, 2,5-nonanediol, 2,6-nonanediol, 2,7-nonanediol, 2,8-nonanediol, 3,3-nonanediol, 3,4-nonanediol, 3,5-nonanediol, 3,6-nonanediol, 3,7-nonanediol, 4,4-nonanediol, 4,5-nonanediol, 4,6-nonanediol, 5,5-nonanediol, 1,1-decanediol, 1,2-decanediol, 1,3-decanediol, 1,4-decanediol, 1,5-decanediol, 1,6-decanediol, 1,7-decanediol, 1,8-decanediol, 1,9-decanediol, 1,10-decanediol, 2,2-decanediol, 2,3-decanediol, 2,4-decanediol, 2,5-decanediol, 2,6-decanediol, 2,7-decanediol, 2,8-decanediol, 2,9-decanediol, 3,3-decanediol, 3,4-decanediol, 3,5-decanediol, 3,6-decanediol, 3,7-decanediol, 3,8-decanediol, 4,4-decanediol, 4,5-decanediol, 4,6-decanediol, 4,7-decanediol, 5,5-decanediol, 5,6-decanediol, or the like. These may be used alone or in a combination of two or more therefrom.

In example embodiments, the anode active material layer 120 may include a graphite-based active material and a silicon-based active material. The graphite-based active material may have high stability, and the silicon-based active material may increase a capacity of the anode.

The graphite-based active material may include a graphite-based carbon such as natural graphite, artificial graphite, a graphitized coke, a graphitized MCMB, a graphitized MPCF, or the like.

In example embodiments, a content of the graphite-based active material may be in a range from 50 wt% to 95 wt% based on a total weight of the anode active material layer 120. In some embodiments, the content of the graphite-based active material may be in a range from 70 wt% to 90 wt% based on the total weight of the anode active material layer 120.

The silicon-based active material may include Si, SiOx (0<x<2), a metal-doped SiOx (0<x<2), a silicon-carbon composite, or the like. The metal may include lithium and/or magnesium, and the metal-doped SiOx (0<x<2) may include a metal silicate.

In example embodiments, a content of the silicon-based active material may be in a range from 1 wt% to 10 wt% based on the total weight of the anode active material layer 120. In example embodiments, the content of the silicon-based active material may be in a range from 2 wt% to 7 wt% based on the total weight of the anode active material layer 120.

In some embodiments, the anode active material layer 120 may further include amorphous carbon, a lithium metal, or a lithium alloy as an anode active material.

Examples of the amorphous carbon include hard carbon, soft carbon, coke, a mesocarbon microbead (MCMB), a mesophase pitch-based carbon fiber (MPCF), or the like.

The lithium metal may include a pure lithium metal or a lithium metal on which a protective layer for suppressing, e.g., dendrite growth is formed. In an embodiment, a lithium metal-containing layer deposited or coated on the anode current collector 125 may be used as the anode active material layer 120. In an embodiment, a lithium thin-film may also be used as the anode active material layer 120.

Examples of elements included in the lithium alloy include aluminum, zinc, bismuth, cadmium, antimony, silicon, lead, tin, gallium, or indium.

In example embodiments, a ratio of the content of the graphite-based active material to the content of the silicon-based active material based on the total weight of the anode active material layer 120 may be in a range from 5 to 30. In some embodiments, the ratio of the content of the graphite-based active material to the content of the silicon-based active material based on the total weight of the anode active material layer 120 may be in a range from 7 to 20.

In the above range, stability of the high-capacity anode 130 may be further improved.

In example embodiments, the anode active material layer 120 may further include a binder, a conductive material, a thickener, or the like.

In some embodiments, a styrene-butadiene rubber (SBR)-based binder, carboxymethyl cellulose (CMC), a polyacrylic acid-based binder, a poly(3,4-ethylenedioxythiophene) (PEDOT)-based binder, or the like, may be used as the binder.

The conductive material may include a carbon-based conductive material such as graphite, carbon black, acetylene black, ketjen black, graphene, carbon nanotube, a vapor-grown carbon fiber (VGCF), a carbon fiber, or the like, and/or a metal-based conductive material including tin, tin oxide, titanium oxide, a perovskite material such as LaSrCoO₃, LaSrMnO₃, or the like, but is not limited thereto.

A thickness of the anode active material layer 120 may be in a range from about 100 µm to 300 µm, but is not particularly limited thereto.

In example embodiments, a loading amount of the anode active material layer 120 may be in a range from 5 mg/cm² to 30 mg/cm². In some embodiments, the loading amount of the anode active material layer 120 may be in a range from 10 mg/cm² to 20 mg/cm².

In the above range, the anode 130 having a higher capacity may be implemented.

In example embodiments, through performing a 1H NMR analysis of the anode active material layer 120, a first peak and/or a second peak, a third peak, and a fourth peak are detected The first peak to the fourth peak may be derived from the alcohol. The 1H NMR analysis is performed using trimethoxybenzene as a reference material. A peak derived from the reference material may be observed in a range of 6 ppm to 6.5 ppm in the 1H NMR analysis. The number of protons of the peak observed in the range of 6 ppm to 6.5 ppm is fixed to three to set a reference area and the areas of the first peak to the fourth peak are represented.

The 1H NMR analysis is performed using a CDCl₃ solvent.

The 1H NMR analysis may be performed, e.g., under room temperature and atmospheric pressure conditions. The room temperature may refer to 20 °C to 30 °C, e.g., 25 °C. The atmospheric pressure may refer to 0.95 atm to 1.05 atm, e.g., 1 atm.

The areas of the first peak to the fourth peak observed from the 1H NMR analysis may be calculated. For example, the areas of the first peak to the fourth peak observed from the 1H NMR analysis of the anode may be calculated using the 1H NMR analysis resulta of the above-described reference material as a reference area.

According to embodiments, a sum of the areas of the first peak observed in a range of 4 ppm to 4.5 ppm and the area of the second peak observed in a range of 3.5 ppm to 4 ppm is greater than 0, and 0.15 or less.

In some embodiments, the area of the first peak may be in a range from 0.01 to 0.04. In some embodiments, the area of the second peak may be in a range from 0.03 to 0.08.

In some embodiments, the first peak and/or the second peak may be observed from the 1H NMR analysis. Depending on the type of the alcohol, the area of the first peak or the second peak may be 0.

In example embodiments, the area of the third peak observed in a range of 1.5 ppm to 2 ppm is greater than 0, and 0.15 or less. In some embodiments, the area of the third peak may be in a range from 0.05 to 0.13.

According to embodiments, the area of the fourth peak observed in a range of 1 ppm to 1.5 ppm is greater than 0, and 0.8 or less. In some embodiments, the area of the fourth peak may be in a range from 0.3 to 0.6.

In the above range, decrease in a capacity of the anode and increase in an internal resistance of the battery may be suppressed when charging and discharging of the battery including the anode are repeated.

In example embodiments, an anode slurry may be prepared by mixing the above-described anode active material and the above-described alcohol in a solvent.

The anode slurry may be coated on the anode current collector 125, and then dried and pressed to form the anode active material layer 120.

Non-limiting examples of the solvent for the anode slurry may include water, pure water, deionized water, distilled water, or the like.

The coating may include a gravure coating, a slot die coating, a multi-layered simultaneous die coating, an imprinting, a doctor blade coating, a dip coating, a bar coating, a casting, or the like, but is not limited thereto.

In some embodiments, a content of the alcohol based on a total weight of the anode active material layer (e.g., a content of residual alcohol after drying and pressing) may be less than 400 ppm. In this range, the above-described 1H NMR peak properties may be easily implemented.

In an embodiment, the content of the alcohol may be 350 ppm or less, or 300 ppm or less. For example, the content of the alcohol may be in a range from 50 ppm to 350 ppm, from 50 ppm to 300 ppm, from 100 ppm to 350 ppm, from 100 ppm to 300 ppm, from 200 ppm to 350 ppm, or from 200 ppm to 300 ppm.

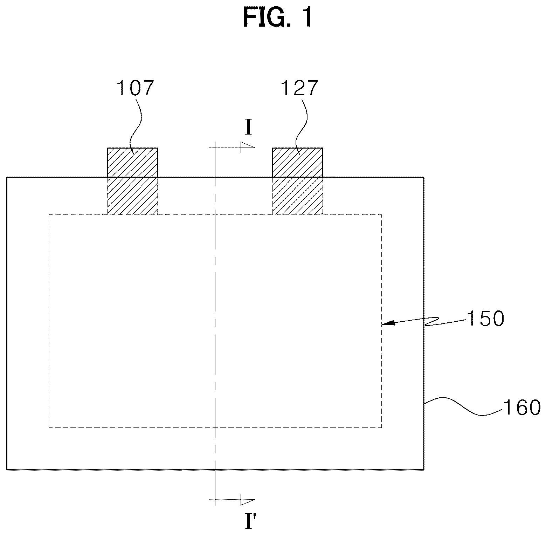

FIGS. 1 and 2 are a schematic plan view and a cross-sectional view, respectively, illustrating a lithium secondary battery according to example embodiments. For example, FIG. 2 is a cross-sectional view taken along a line I-I' of FIG. 1.

Referring to FIGS. 1 and 2, a lithium secondary battery may include an electrode assembly 150 including a cathode 100, the anode 130, and a separator 140 interposed between the cathode 100 and the anode 130. The electrode assembly 150 may be housed in a case 160 together with an electrolyte solution to be impregnated therein.

The cathode 100 may include a cathode current collector 105 and a cathode active material layer 110 on the cathode current collector 105. The cathode active material layer 110 includes a cathode active material, and may further include a cathode binder and a conductive material.

For example, the cathode active material may include a compound capable of reversibly intercalating and de-intercalating lithium ions.

In example embodiments, the cathode active material may include a lithium-transition metal oxide. For example, the lithium-transition metal oxide includes nickel Ni, and may further include at least one of cobalt (Co) and manganese (Mn).

For example, the lithium-transition metal oxide may include a layered structure represented by Chemical Formula 1 below.

[Chemical Formula 1] LiₓNi_{(1-a-b)}CoₐM_{b}O_{y}

For example, in Chemical Formula 1, M includes at least one of Al, Zr, Ti, Cr, b, Mg, Mn, Ba, Si, y, W and Sr, and 0.9≤x≤1.2, 1.9≤y≤2.1, and 0≤a+b≤0.5.

In some embodiments, 0<a+b≤0.4, 0<a+b≤0.3, 0<a+b≤0.2, 0<a+b≤0.17, 0<a+b≤0.15, 0<a+b≤0.12, or 0<a+b≤0.1.

As represented by Chemical Formula 1, the lithium-transition metal oxide may include Ni in the largest amount or molar ratio among Ni, Co and M. Ni may substantially function as a metal associated with a power and/or a capacity of the lithium secondary battery, and Ni may be included in the largest amount among transition metals, so that a high-capacity and high-power lithium secondary battery may be implemented.

When the content of Ni in the cathode active material or the lithium-transition metal oxide increases, chemical stability, e.g., high-temperature storage stability of the secondary battery may be relatively degraded. Further, during repeated charging/discharging, surface damages of the cathode active material or side reactions with the electrolyte solution may occur. Accordingly, sufficient high-power/high-capacity properties from the high-Ni content may not be implemented.

In an embodiment, the lithium-transition metal oxide may further include a coating element or a doping element. For example, the coating element or the doping element may include Al, Ti, Ba, Zr, Si, B, Mg, P, Sr, W, La, an alloy thereof, or an oxide thereof. In this case, a lithium secondary battery having further improved life-span properties may be implemented.

A slurry may be prepared by mixing and stirring the cathode active material with a binder, a conductive material and/or a dispersant in a solvent. The slurry may be coated on the cathode current collector 105, and then dried and pressed to obtain the cathode 100.

The cathode current collector 105 may include, e.g., stainless steel, nickel, aluminum, titanium, copper, or an alloy thereof, and may include aluminum or an aluminum alloy.

The binder may include, e.g., an organic binder such as vinylidene fluoride-hexafluoropropylene copolymer (PVDF-co-HFP), polyvinylidenefluoride (PVDF), polyacrylonitrile or polymethylmethacrylate, or an aqueous binder such as styrene-butadiene rubber (SBR) that may be used with a thickener such as carboxymethyl cellulose (CMC).

For example, a PVDF-based binder may be used as the cathode binder. In this case, an amount of the binder for forming the cathode active material layer may be reduced, and an amount of the cathode active material may be relatively increased, thereby improving the power and capacity of the secondary battery.

The conductive material may be included to promote electron transfer between active material particles. For example, the conductive material may include a carbon-based conductive material such as graphite, carbon black, graphene, carbon nanotube, and/or a metal-based conductive agent including tin, tin oxide, titanium oxide, a perovskite material such as LaSrCoO₃, LaSrMnO₃, or the like.

The separator 140 may be interposed between the cathode 100 and the anode 130. The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, or the like. The separator 140 may also include a non-woven fabric formed of a glass fiber with a high melting point, polyethylene terephthalate fibers, or the like.

In some embodiments, an area (e.g., a contact area with the separator 140) and/or a volume of the anode 130 may be larger than that of the cathode 100. Accordingly, lithium ions generated from the cathode 100 may be easily transferred to the anode 130 without, e.g., being precipitated.

In example embodiments, an electrode cell may be defined by the cathode 100, the anode 130 and the separator 140, and a plurality of electrode cells may be stacked to form, e.g., the electrode assembly 150 in a jelly roll shape. For example, the electrode assembly 150 may be formed by winding, stacking, folding, or the like, of the separator 140.

The electrode assembly 150 may be accommodated in the case 160 together with the electrolyte solution to define the lithium secondary battery. In some embodiments, a non-aqueous electrolyte solution may be used as the electrolyte solution.

The non-aqueous electrolyte solution includes a lithium salt as an electrolyte, and an organic solvent. The lithium salt may be represented, e.g., as Li⁺X⁻. Examples of the anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or the like.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more.

As illustrated in FIG. 1, electrode tabs (a cathode tab and an anode tab) may protrude from the cathode current collector 105 and the anode current collector 125, respectively, included in each electrode cell, and may extend to one side of the case 160. The electrode tabs may be fused together with the one side of the case 160 to form electrode leads (a cathode lead 107 and an anode lead 127) that may extend or may be exposed to an outside of the case 160.

The lithium secondary battery may be manufactured, e.g., in a cylindrical type using a can, a prismatic type, a pouch type, or a coin type.

The present disclosure includes the following numbered aspects:
Aspect 1: An anode for a secondary battery, comprising: an anode current collector; and an anode active material layer disposed on a surface of the anode collector and comprising an alcohol, wherein, in a 1H NMR analysis of the anode active material layer using a CDCl₃ solvent and trimethoxybenzene as a reference material under room temperature and atmospheric pressure and setting a reference area by fixing the number of protons of a peak observed in a range of 6 ppm to 6.5 ppm to three, a sum of a peak area of a first peak observed in a range of 4 ppm to 4.5 ppm and a peak area of a second peak observed in a range of 3.5 ppm to 4 ppm is greater than 0, and 0.15 or less, a peak area of a third peak observed in a range of 1.5 ppm to 2 ppm is greater than 0, and 0.15 or less, and a peak area of a fourth peak observed in a range of 1 ppm to 1.5 ppm is greater than 0, and 0.8 or less.
Aspect 2: The anode for a secondary battery according to aspect 1, wherein the peak area of the first peak is in a range from 0.01 to 0.04.
Aspect 3: The anode for a secondary battery according to any one of aspects 1 and 2, wherein the peak area of the second peak is in a range from 0.03 to 0.08.
Aspect 4: The anode for a secondary battery according to any one of aspects 1 to 3, wherein the peak area of the third peak is in a range from 0.05 to 0.13.
Aspect 5: The anode for a secondary battery according to any one of aspects 1 to 4, wherein the peak area of the fourth peak is in a range from 0.3 to 0.6.
Aspect 6: The anode for a secondary battery according to any one of aspects 1 to 5, wherein the alcohol comprises a monohydric alcohol or a dihydric alcohol.
Aspect 7: The anode for a secondary battery according to any one of aspects 1 to 6, wherein the alcohol comprises a monohydric alcohol having 3 to 10 carbon atoms or a dihydric alcohol having 3 to 10 carbon atoms.
Aspect 8: The anode for a secondary battery according to any one of aspects 1 to 7, wherein a loading amount of the anode active material layer is in a range from 5 mg/cm² to 30 mg/cm².
Aspect 9: The anode for a secondary battery according to any one of aspects 1 to 8, wherein the anode active material layer comprises a graphite-based active material and a silicon-based active material.
Aspect 10: The anode for a secondary battery according to aspect 9, wherein a ratio of a content of the graphite-based active material to a content of the silicon-based active material based on a total weight of the anode active material layer is in a range from 5 to 30.
Aspect 11: A lithium secondary battery, comprising: the anode for a secondary battery according to any one of aspects 1 to 10; and a cathode opposing the anode.

### Examples and Comparative Examples

1,3-butanediol was added while varying a content to a mixture including 80 parts by weight of artificial graphite particles (D50: ~10 µm), 10 parts by weight of SiOx (0<x<2), 3 parts by weight of graphene as a conductive material, and 4 parts by weight of CMC/SBR as a binder, and the mixture was dispersed in pure water as a solvent to form an anode slurry.

The anode slurry was coated on a surface of a copper foil (thickness: 8 µm), completely dried at a temperature of 150 °c, and pressed to obtain an anode including an anode active material layer (loading amount 10.2 mg/cm² to 15.6 mg/cm²) having a thickness in a range of 100 µm to 250 µm.

Specifically, in Examples, the content of 1,3-butanediol was controlled in a range of less than 400 ppm based on a total weight of the anode active material layer (after the drying and pressing). In Comparative Examples, the content of 1,3-butanediol was controlled in a range exceeding 400 ppm based on the weight of the anode active material layer.

As an electrolyte solution, a solution in which 10 wt% of fluoroethylene carbonate (FEC) was added to an EC/EMC/DEC (25/45/30, volume ratio) solution containing 1.2 M LiPF₆ salt was used. A battery was manufactured using a lithium metal as a counter electrode and a reference electrode, and a polypropylene (PP) film as a separator.

### Reference Example

An anode and a battery were manufactured by the same method as that in Example, except that 1,3-butanediol was not used.

A 1H NMR analysis was performed on the anodes of Examples, Comparative Examples, and Reference Example. The analysis was performed using a CDCl₃ solvent under conditions of room temperature (about 25 °C) and atmospheric pressure (about 1 atm).

A reference area was calculated by fixing the number of protons of a peak derived from trimethoxybenzene observed in a range of 6 ppm to 6.5 ppm to three, and positions of peaks observed in a range of 4 ppm to 4.5 ppm, a range of 3.5 ppm to 4 ppm, a range of 1.5 ppm to 2 ppm, or a range of 1 ppm to 1.5 ppm were confirmed, and an area of each peak was calculated from the 1H NMR analysis results of the electrodes of Examples, Comparative Examples, and Reference Example,

The measurement results are shown in Table 1 below.

**[Table 1]**

| | first peak | | second peak | | third peak | | fourth peak | |
|---|---|---|---|---|---|---|---|---|
| | position (ppm) | area | position (ppm) | area | position (ppm) | area | position (ppm) | area |
| Example 1 | 4.03-4.13 | 0.0293 | 3.80-3.93 | 0.0594 | 1.68-1.73 | 0.0897 | 1.23-1.27 | 0.4311 |
| Example 2 | 4.03-4.13 | 0.0390 | 3.80-3.93 | 0.0791 | 1.68-1.73 | 0.1105 | 1.23-1.27 | 0.4117 |
| Example 3 | 4.03-4.13 | 0.0302 | 3.80-3.93 | 0.0622 | 1.68-1.73 | 0.0854 | 1.23-1.27 | 0.4523 |
| Example 4 | 4.03-4.13 | 0.0291 | 3.80-3.93 | 0.0616 | 1.68-1.73 | 0.0838 | 1.23-1.27 | 0.4261 |
| Example 5 | 4.03-4.13 | 0.0289 | 3.80-3.93 | 0.0582 | 1.68-1.73 | 0.0815 | 1.23-1.27 | 0.4082 |
| Comparative Example 1 | 4.03-4.13 | 0.0528 | 3.80-3.93 | 0.1009 | 1.68-1.73 | 0.1612 | 1.23-1.27 | 0.7523 |
| Comparative Example 2 | 4.03-4.13 | 0.0617 | 3.80-3.93 | 0.1241 | 1.68-1.73 | 0.2031 | 1.23-1.27 | 0.8218 |
| Reference Example | - | - | - | - | - | - | - | - |

### Experimental Example

Physical properties of the anodes and batteries of Examples, Comparative Examples, and Reference Example were evaluated as follows, and the evaluation results are shown in table 2.

### (1) Evaluation on crack and curl

In the fabrication of the anode according to Examples, Comparative Examples, and Reference Example, cracks in the secondary active material layer and curls of the anode after the coating and drying were visually inspected. The case where cracks occurred was designated as X, and the case where no cracks occurred was designated as O. The case where no curls occurred was designated as O, the case where partial curls occurred was designated as △, and the case where excessive curls occurred was designated as X.

### (2) Evaluation on battery life-span property

For the batteries of Examples, Comparative Examples and Reference Example, charging (CC/CV 1.0C 4.2V 0.05C CUT-OFF) and discharging (CC 1.0C 2.5V CUT-OFF) were repeated 400 times to measure a capacity and an internal resistance (DCIR).

A capacity after performing the 1st cycle was set as an initial capacity, and a percentage value of a capacity after the 400th cycle with respect to the initial capacity was calculated as a capacity retention.

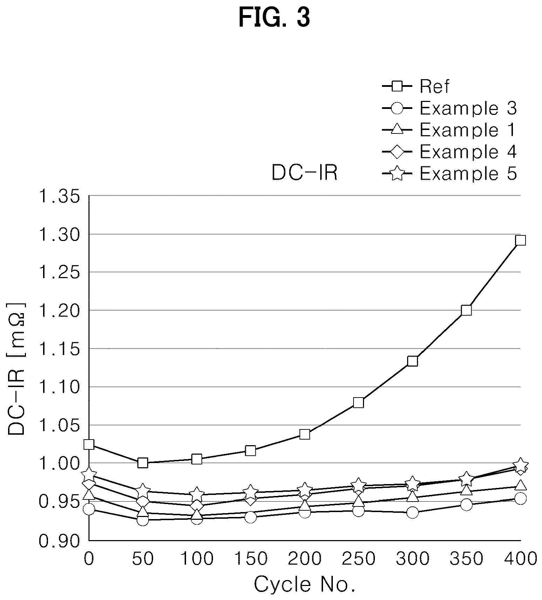

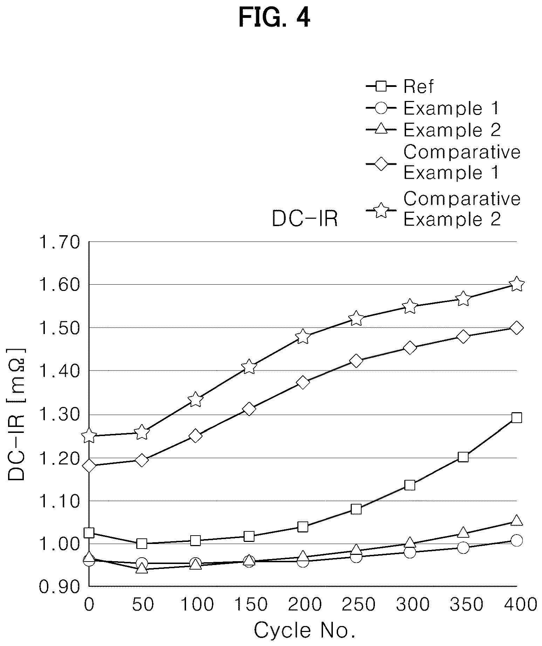

FIGS. 3 and 4 are graphs showing internal resistance of batteries according to Reference Example, Examples and Comparative Examples according to the number of cycles.

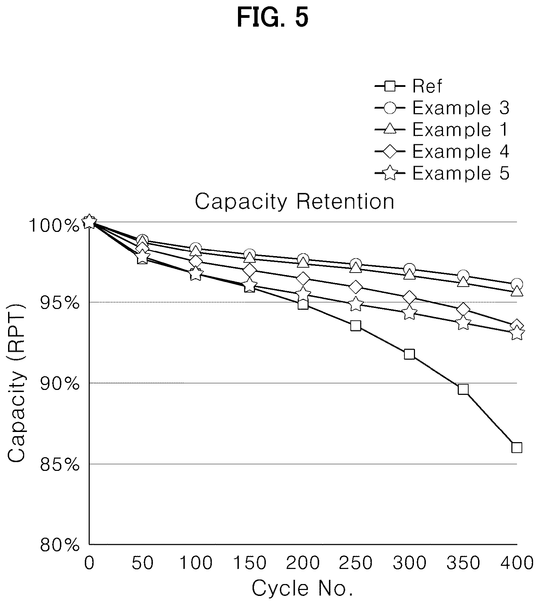

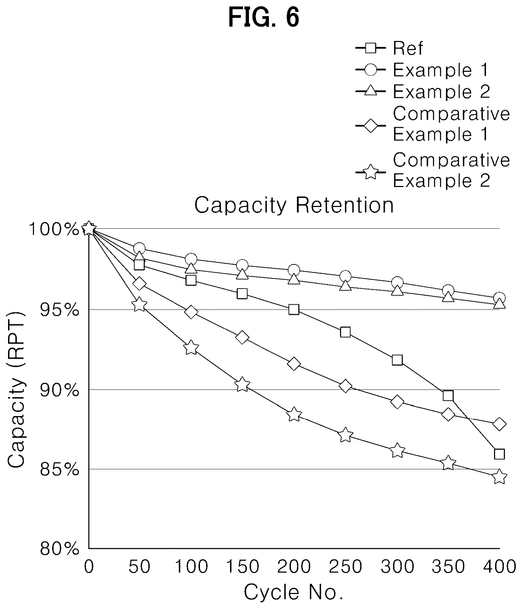

FIGS. 5 and 6 are graphs showing discharge capacities of batteries of Reference Example, Examples and Comparative Examples according to the number of cycles.

**[Table 2]**

| | crack evaluation | curl evaluation | capacity retention (%) | resistance (mΩ) |
|---|---|---|---|---|
| Example 1 | O | O | 95.6 | 1.007 |
| Example 2 | O | O | 95.2 | 1.051 |
| Example 3 | O | O | 96.2 | 0.955 |
| Example 4 | O | O | 93.5 | 0.993 |
| Example 5 | O | O | 93.1 | 0.997 |
| Comparative Example 1 | O | O | 87.7 | 1.504 |
| Comparative Example 2 | O | O | 84.5 | 1.601 |
| Reference Example | X | X | 86.0 | 1.293 |

Referring to FIGS. 3 to 6, Table 1 and Table 2, in Examples having the areas of the first peak to the fourth peak through the 1H NMR analysis in the above-described range, a surface tension and a contact angle of the anode surface were reduced so that curls and cracks did not occur during the anode fabrication. Additionally, in the batteries including the anodes of Examples, high capacity retentions and low internal resistances were provided.

In the 1H NMR analysis results of the anodes of Comparative Examples, the area of each peak was excessively increased. Accordingly, the internal resistance of the battery was excessively increased, and the battery life-span properties were deteriorated compared to those from the batteries of Examples.

The above descriptions are intended to provide merely examples of the principles of the present disclosure, and other elements may be included without departing from the scope of the present disclosure.

## Claims

1. An anode for a secondary battery, comprising:
an anode current collector; and
an anode active material layer disposed on a surface of the anode collector and comprising an alcohol,
wherein, in a 1H NMR analysis of the anode active material layer using a CDCl₃ solvent and trimethoxybenzene as a reference material under room temperature and atmospheric pressure and setting a reference area by fixing the number of protons of a peak observed in a range of 6 ppm to 6.5 ppm to three,
a sum of a peak area of a first peak observed in a range of 4 ppm to 4.5 ppm and a peak area of a second peak observed in a range of 3.5 ppm to 4 ppm is greater than 0, and 0.15 or less,
a peak area of a third peak observed in a range of 1.5 ppm to 2 ppm is greater than 0, and 0.15 or less, and
a peak area of a fourth peak observed in a range of 1 ppm to 1.5 ppm is greater than 0, and 0.8 or less.

2. The anode for a secondary battery according to claim 1, wherein the peak area of the first peak is in a range from 0.01 to 0.04.

3. The anode for a secondary battery according to any one of claims 1 and 2, wherein the peak area of the second peak is in a range from 0.03 to 0.08.

4. The anode for a secondary battery according to any one of claims 1 to 3, wherein the peak area of the third peak is in a range from 0.05 to 0.13.

5. The anode for a secondary battery according to any one of claims 1 to 4, wherein the peak area of the fourth peak is in a range from 0.3 to 0.6.

6. The anode for a secondary battery according to any one of claims 1 to 5, wherein the alcohol comprises a monohydric alcohol or a dihydric alcohol.

7. The anode for a secondary battery according to any one of claims 1 to 6, wherein the alcohol comprises a monohydric alcohol having 3 to 10 carbon atoms or a dihydric alcohol having 3 to 10 carbon atoms.

8. The anode for a secondary battery according to any one of claims 1 to 7, wherein a loading amount of the anode active material layer is in a range from 5 mg/cm² to 30 mg/cm².

9. The anode for a secondary battery according to any one of claims 1 to 8, wherein the anode active material layer comprises a graphite-based active material and a silicon-based active material.

10. The anode for a secondary battery according to claim 9, wherein a ratio of a content of the graphite-based active material to a content of the silicon-based active material based on a total weight of the anode active material layer is in a range from 5 to 30.

11. A lithium secondary battery, comprising:
the anode for a secondary battery according to any one of claims 1 to 10; and
a cathode opposing the anode.
